# EUROPEAN PATENT APPLICATION

(11) **EP 4 124 029 A1**
(43) Date of publication of application: **25.01.2023**
(21) Application number: 20926125.4
(22) Date of filing: 17.03.2020
(51) Int. Cl.: H04N 7/18, G06F 21/32, G06T 1/00, G07C 9/00

(54) **GATE SYSTEM, GATE DEVICE, IMAGE PROCESSING METHOD THEREFOR, PROGRAM, AND ARRANGEMENT METHOD FOR GATE DEVICE**

(71) Applicant: NEC Corporation, 108-8001 Tokyo (JP)
(72) Inventor: OTANI, Takumi, Tokyo 108-8001 (JP); INOUE, Junichi, Tokyo 108-8001 (JP); TAKAHASHI, Sho, Kawasaki-shi, Kanagawa 213-8511 (JP)
(74) Representative: Betten & Resch
(86) International application number: PCT/JP2020/011790
(87) International publication number: WO 2021/186576

(57) **Abstract**

A gate apparatus (10) includes an acquisition unit (102) acquiring an image captured by a camera (5) provided at a side of an aisle through which a person whose personal identification is required passes and a processing unit (104) causing an authentication apparatus (50) to execute authentication processing on a predetermined region in the acquired image.

## Description

### TECHNICAL FIELD

The present invention relates to a gate system, a gate apparatus, an image processing method therefor, a program, and a gate apparatus arrangement method.

### BACKGROUND ART

With progress in the image recognition technology, practical application of an authentication apparatus using a facial image of a person at entry and exit into and from a facility or the like requiring security management has advanced in recent years, and various technologies for improving recognition precision of such an apparatus have been proposed.

For example, a video surveillance apparatus described in Patent Document 1 previously computes preprocessing information indicating a positional relation between a position of a recognition processing region being a target of image recognition processing and a camera installation position. Then, the apparatus computes coordinates of an actual measurement and a recognition processing region in a camera image captured by a camera with reference to the preprocessing information and executes image recognition processing on a surveillance target passing through the recognition processing region by using the coordinates. Furthermore, the apparatus determines an area where the face of a person is positioned, based on a distribution of actual measurements of heights of persons, and narrows down the recognition processing region by determining a region in a camera image related to the area to be the recognition processing region.

Further, a personal authentication system described in Patent Document 2 improves authentication precision by acquiring a physical feature other than a facial image (such as a height) of a target person before performing face matching processing with a moving person as the authentication target and narrowing down facial images to be collated, based on the acquired physical feature.

Patent Document 3 describes a technology for improving throughput of gate passage. When a plurality of users enter a lane in a gate, a face authentication system described in this document first reads IDs from wireless tags of the users and narrows down a collation target from registered face feature values of the users acquired in relation to the IDs. Then, the face authentication system selects a person being a face authentication target from captured images of the users by using the largest face, an interpupillary distance, or the like and acquires a face feature value of the facial image. Then, the face authentication system collates a face feature value being the narrowed-down collation target against the selected face feature value.

### RELATED DOCUMENTS

### PATENT DOCUMENTS

Patent Document 1: Japanese Patent Application Publication No. 2013-51477
Patent Document 2: Japanese Patent Application Publication No. 2008-158679
Patent Document 3: International Application Publication No. WO 2018/181968

### SUMMARY

### TECHNICAL PROBLEM

In the technology described in aforementioned Patent Document 1, coordinates of a recognition processing region in a camera image needs to be previously computed when an image region is narrowed down; and therefore computation processing is complex, and a processing load is heavy. The load further increases in a case of a plurality of gates being installed together. Further, the technology described in Patent Document 2 requires previous acquisition of information indicating a physical feature of an authentication target person and therefore is unsuitable for a gate system managing traffic of a large number of unspecified people.

An object of the present invention is to improve precision and efficiency of authentication processing performed by using an image captured by a camera installed at a location where personal identification is required.

### SOLUTION TO PROBLEM

In order to solve the aforementioned problem, aspects of the present invention employ the following configurations, respectively.

A first aspect relates to a gate apparatus.

A gate apparatus according to the first aspect includes:
an acquisition means for acquiring an image captured by an image capture means provided at a side of an aisle through which a person whose personal identification is required passes; and
a processing means for causing an authentication means to execute authentication processing on a predetermined region in the acquired image.

A second aspect relates to a gate apparatus control method executed by at least one computer.

A gate apparatus image processing method according to the second aspect includes, by a gate apparatus:
acquiring an image captured by an image capture means provided at a side of an aisle through which a person whose personal identification is required passes; and
causing an authentication means to execute authentication processing on a predetermined region in the acquired image.

A third aspect relates to a gate system.

A gate system according to the third aspect includes:
a camera being provided at a side of an aisle through which a person whose personal identification is required passes;
an authentication apparatus; and
a gate apparatus, wherein
the gate apparatus includes:
   an acquisition means for acquiring an image captured by the image capture means; and
   a processing means for causing the authentication apparatus to execute authentication processing on a predetermined region in the acquired image.

Note that another aspect of the present invention may be a program causing at least one computer to execute the method according to the aforementioned second aspect or may be a computer-readable storage medium on which such a program is recorded. The storage medium includes a non-transitory tangible medium.

The computer program includes a computer program code causing a computer to implement the image processing method on the gate apparatus when being executed by the computer.

Furthermore, a yet another aspect of the present invention may be a gate apparatus arrangement method for placing a plurality of the gate apparatuses according to the aforementioned first aspect in parallel.

Note that any combination of the components described above, and representations of the present invention converted among a method, an apparatus, a system, a storage medium, a computer program, and the like are also valid as embodiments of the present invention.

Further, various components of the present invention do not necessarily need to be individually independent, and, for example, a plurality of components may be formed as a single member, a plurality of members may form a single component, a certain component may be part of another component, and part of a certain component may overlap with part of another component.

Further, while a plurality of procedures are described in a sequential order in the method and the computer program according to the present invention, the order of description does not limit the order in which the plurality of procedures are executed. Therefore, when the method and the computer program according to the present invention are implemented, the order of the plurality of procedures may be changed without affecting the contents.

Furthermore, a plurality of procedures in the method and the computer program according to the present invention are not limited to be executed at timings different from each other. Therefore, for example, another procedure may occur during execution of a certain procedure, and a part or the whole of an execution timing of a certain procedure may overlap with an execution timing of another procedure.

### ADVANTAGEOUS EFFECTS

The present invention enables improvement in precision and efficiency of authentication processing performed by using an image captured by a camera installed at a location where personal identification is required.

### BRIEF DESCRIPTION OF THE DRAWINGS

The aforementioned object, other objects, features, and advantages will become more apparent by use of the following preferred example embodiments and accompanying drawings.

Fig. 1 is a diagram illustrating a conceptual configuration example of a gate system according to an example embodiment.
Fig. 2 is a plan view of the gate system 1 viewed from above.
Fig. 3 is a diagram illustrating an example of an image captured by a camera.
Fig. 4 is a functional block diagram illustrating a functional configuration example of a gate apparatus according to the example embodiment.
Fig. 5 is a block diagram illustrating a hardware configuration of a computer providing the gate apparatus.
Fig. 6 is a flowchart illustrating an operation example of the gate apparatus according to the example embodiment.
Fig. 7 is a flowchart illustrating details of the authentication processing in the flowchart in Fig. 6.
Fig. 8 is a functional block diagram illustrating a functional configuration example of a gate apparatus according to an example embodiment.
Fig. 9 is a flowchart illustrating part of an operation example of the gate apparatus according to the example embodiment.
Fig. 10 is a diagram for illustrating a processing example of an image captured by a camera.
Fig. 11 is a front view of a camera unit.
Fig. 12 is a diagram for illustrating processing examples of images captured by cameras.
Fig. 13 is a diagram for illustrating processing examples of an image captured by a camera.
Fig. 14 is a diagram for illustrating processing examples of an image captured by a camera.
Fig. 15 is a diagram illustrating a configuration example of a plurality of aisles being installed in parallel.
Fig. 16 is a diagram illustrating an example of an image captured by a gate apparatus in which a plurality of aisles are installed in parallel.

### DESCRIPTION OF EMBODIMENTS

Example embodiments of the present invention will be described below by using drawings. Note that, in every drawing, similar components are given similar signs, and description thereof is omitted as appropriate.

In the example embodiments, "acquisition" includes at least either of an apparatus getting data or information stored in another apparatus or a storage medium (active acquisition), and an apparatus inputting data or information output from another apparatus to the apparatus (passive acquisition). Examples of the active acquisition include making a request or an inquiry to another apparatus and receiving a response, and readout by accessing another apparatus or a storage medium. Further, examples of the passive acquisition include reception of distributed (or, for example, transmitted or push notified) information. Furthermore, "acquisition" may refer to acquisition by selection from received data or information, or selective reception of distributed data or information.

### (First Example Embodiment)

### <System Configuration>

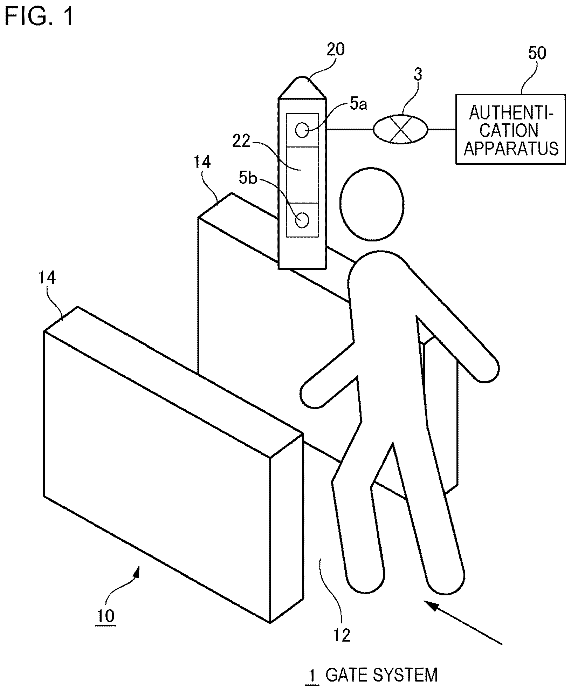

Fig. 1 is a diagram illustrating a conceptual configuration example of a gate system 1 according to an example embodiment.

The gate system 1 includes a gate apparatus 10 and an authentication apparatus 50. The gate apparatus 10 includes housings 14 and a camera unit 20. The camera unit 20 includes cameras 5 (while the diagram includes two cameras being a first camera 5a and a second camera 5b, the cameras are simply referred to as cameras 5 when distinction is not particularly required) and a display unit 22.

The authentication apparatus 50 is connected to the gate apparatus 10 through a communication network 3. The authentication apparatus 50 according to the present example embodiment performs authentication processing of a person by collating a feature value extracted from a facial image or the like of the person acquired by the camera 5 in the gate apparatus 10 with a preregistered feature value of a facial image or the like of a person.

While the authentication processing is performed by the authentication apparatus 50 by using a facial image of a person, according to the present example embodiment, the authentication processing may be performed by another authentication apparatus using another type of biometric authentication information. Examples of another type of biometric authentication information include a feature value of at least one of an iris, a vein, a pinna, a fingerprint, a gait, a body-build (such as a height, a shoulder width, a length from the shoulder to the hem, and a skeleton). The authentication apparatus 50 performs the authentication processing by using a feature value of biometric authentication information extracted from a captured image of a person. Note that extraction processing of a feature value of biometric authentication information may be performed by the authentication apparatus 50. The gate apparatus 10 may extract a region including biometric authentication information from an image and transmit the region to the authentication apparatus 50; and the authentication apparatus 50 may extract biometric authentication information from the received image region.

Further, the authentication apparatus 50 may be provided inside or outside the gate apparatus 10. Specifically, the authentication apparatus 50 may be hardware integrated with the gate apparatus 10 or hardware separate from the gate apparatus 10.

For example, the gate apparatus 10 in the gate system 1 according to the present example embodiment is installed at a boarding gate at an airport. Alternatively, the gate apparatus 10 may be installed at an entrance of a room in which entering and exiting people are managed. Alternatively, the gate apparatus 10 may be combined with a payment terminal for cashless payment and be installed as a gate for the payment terminal at a store or the like. Alternatively, the gate apparatus 10 may be installed as a gate at an entrance of an unmanned store without staffing. Thus, the gate apparatus in the gate system 1 according to the present example embodiment is installed at a location (checkpoint) where personal identification is required.

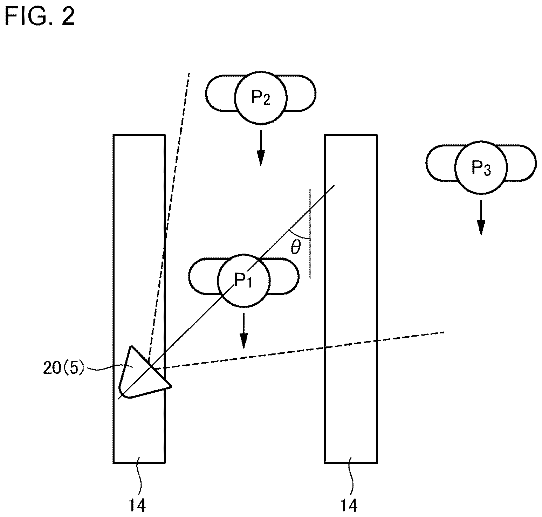

Fig. 2 is a plan view of the gate system 1 viewed from above. As illustrated in Fig. 1 and Fig. 2, the housing 14 has a predetermined height and extends across a predetermined distance along an aisle 12 along which a person passes. Two housings 14 are installed side by side along the aisle 12 with a predetermined distance in between on both sides of the aisle 12. The two housings 14 are preferably installed in parallel. In other words, the aisle 12 is formed by the housings 14.

An entrance side of the aisle 12 is open. An opening-closing flap door (unillustrated) may be openably and closably provided on an exit side of the aisle 12. In that case, for example, opening-closing control of the opening-closing flap door may be performed based on an authentication result of the authentication apparatus 50. Specifically, the opening-closing flap door is controlled to open in such a way as to enable a person whose authentication is successful to pass through the aisle 12, and the opening-closing flap door is controlled to close in such a way as to disable a person whose authentication is unsuccessful from passing through the aisle 12.

As illustrated in Fig. 2, the camera unit 20 is installed beside the aisle 12. For example, the camera 5, in other words, the camera unit 20 is installed in such a way that an intersection angle θ between the optical axis of the camera 5 and a traveling direction of the aisle 12 (a direction parallel to the inner side of the housing 14) is within a range from 0° to 90°. Further, the camera 5 may be installed in such a way that the optical axis of the camera 5 diagonally intersects the traveling direction of the aisle 12. For example, the camera 5 may be installed in such a way that the intersection angle θ between the optical axis of the camera 5 and the traveling direction of the aisle 12 is equal to or greater than 30° and equal to or less than 60°.

The camera 5 includes imaging elements such as a lens and a charge coupled device (CCD) image sensor. The camera 5 may be a digital video camera or a digital camera for general purposes. The camera 5 may include a mechanism for performing adjustment and control of focusing, exposure compensation, an f-number, a shutter speed, an ISO speed, and the like in order to increase image quality of a facial image in which a person is captured and acquire a feature value optimum for facial image authentication and may be controlled automatically or by remote operation or the like from an operation terminal (unillustrated) or the like held by a manager.

An image generated by the camera 5 is captured and is transmitted to the authentication apparatus 50 preferably in real time. Note that images transmitted to the authentication apparatus 50 may not be directly transmitted from the camera 5 and may be images delayed by a predetermined time. Images captured by the camera 5 may be temporarily stored in a separate storage apparatus (unillustrated) and may be read from the storage apparatus by the authentication apparatus 50 sequentially or at predetermined intervals. Furthermore, images transmitted to the authentication apparatus 50 are preferably dynamic images but may be frame images captured at predetermined intervals or static images.

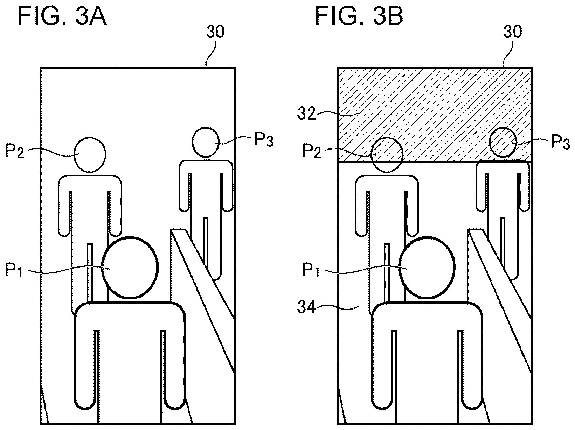

Fig. 3 is a diagram illustrating an example of an image 30 captured by the camera 5. Three persons P1, P2, and P3 in Fig. 2 are captured in the image 30 in Fig. 3A. The person P1 is an authentication target person. The two persons P2 and P3 other than the person P1 are persons other than the authentication target person in this case. In other words, persons other than the authentication target person are captured in the image 30. While the image 30 according to the present example embodiment is a full high-definition image with a resolution of 1080 by 1920 pixels, the image is not limited thereto.

### <Functional Configuration Example>

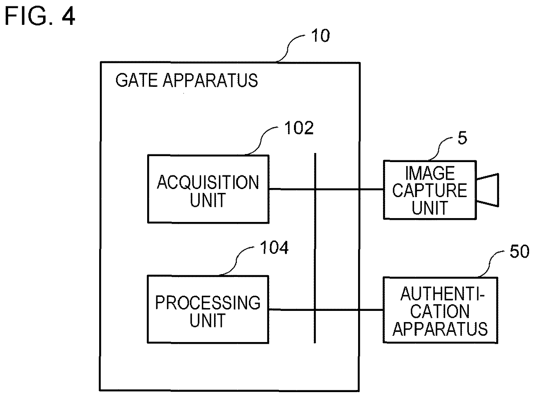

Fig. 4 is a functional block diagram illustrating a functional configuration example of the gate apparatus 10 according to the present example embodiment.

In each of the following diagrams, a configuration of a part not related to the essence of the present invention is omitted and is not illustrated.

The gate apparatus 10 includes an acquisition unit 102 and a processing unit 104.

The acquisition unit 102 acquires an image 30 (in Fig. 3A) captured by the camera 5 (image capture means) provided at a side of the aisle 12. The processing unit 104 causes the authentication apparatus 50 (authentication means) to execute the authentication processing on a predetermined region 34 (in Fig. 3B) in the acquired image 30.

As illustrated in in Fig. 3A, the image 30 includes not only the person P1 being the authentication target but also two persons being the person P2 and the person P3. When being directly caused to perform the authentication processing on the image 30, the authentication apparatus 50 extracts a face region for a person other than the authentication target and executes the authentication processing on the person and therefore performs originally unnecessary processing, leading to an increased load.

Therefore, the processing unit 104 extracts a predetermined region 34 from the image 30 and causes the authentication apparatus 50 to perform the authentication processing on the region 34 in such a way that the region 34 includes the person P1 being the authentication processing target. As illustrated in Fig. 3B, the region 34 is extracted by removing (masking or trimming) an upper region 32 of the image 30. Note that, as a processing method for extracting the region 34 from the image 30, the region 32 may be trimmed from the image 30, or the region 34 may be extracted by temporarily masking the region 32.

For example, the region 34 (and/or the masked region 32) is preset based on the width of the aisle 12, the length of the aisle 12 (the distance from a person in a surrounding area), the installation position of the camera 5 (the distance between the camera 5 and the authentication target person, and the height), the orientation of the optical axis of the camera 5 (the angle formed by the optical axis relative to the traveling direction of the person), and the angle of view of the camera 5. For example, in a case of the resolution of the image 30 being 1080 by 1920 pixels, the region 34 is set to a region acquired by removing the region 32 being a range of 500 pixels from the upper end of the image 30 (around 25% of the image 30 in a height direction in the diagram), according to the present example embodiment. The range of the region 34 or the region 32 may be changed through accepting an input operation by a manager.

A setting may be accepted from a setting screen by using a terminal (unillustrated) used by a manager managing the gate apparatus 10; or a computer providing the gate apparatus 10 may be connected to a display, and a setting operation may be accepted by causing the display to display a setting screen.

While a range including the upper end of the image 30 is set to the masked region 32 in the example in Fig. 3, a range including the lower end of the image 30 may be removed or both regions may be removed. Furthermore, a range including at least one of the left and right ends of the image 30 may be removed.

The processing unit 104 causes the authentication apparatus 50 to execute the authentication processing on the thus extracted region 34.

### <Hardware Configuration Example>

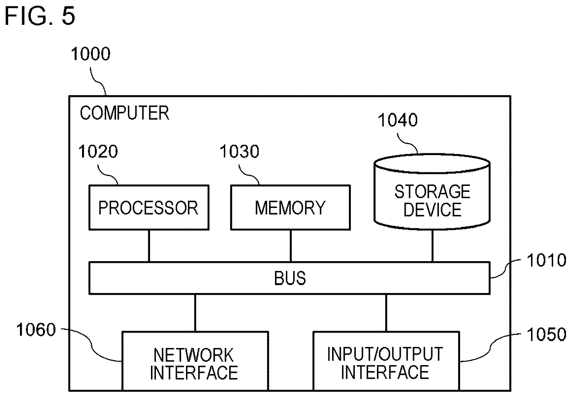

Fig. 5 is a block diagram illustrating a hardware configuration of a computer 1000 providing the gate apparatus 10.

The computer 1000 includes a bus 1010, a processor 1020, a memory 1030, a storage device 1040, an input-output interface 1050, and a network interface 1060.

The bus 1010 is a data transmission channel for the processor 1020, the memory 1030, the storage device 1040, the input-output interface 1050, and the network interface 1060 to transmit and receive data to and from one another. Note that the method of interconnecting the processor 1020 and other components is not limited to a bus connection.

The processor 1020 is a processor provided by a central processing unit (CPU), a graphics processing unit (GPU), or the like.

The memory 1030 is a main storage provided by a random access memory (RAM) or the like.

The storage device 1040 is an auxiliary storage provided by a hard disk drive (HDD), a solid state drive (SSD), a memory card, a read only memory (ROM), or the like. The storage device 1040 stores program modules implementing the functions of the gate apparatus 10 (such as the acquisition unit 102 and the processing unit 104, and a selection unit 106 to be described later). By reading each program module into the memory 1030 and executing the program module by the processor 1020, each function related to the program module is implemented. Further, the storage device 1040 also functions as various storage units.

The program modules may be recorded in a storage medium. Storage media recording the program modules may include a non-transitory tangible medium usable by the computer 1000, and a program code readable by the computer 1000 (processor 1020) may be embedded in the medium.

The input-output interface 1050 is an interface for connecting the gate apparatus 10 to various types of input-output equipment (such as the display unit 22).

The network interface 1060 is an interface for connecting the gate apparatus 10 to another apparatus (such as the authentication apparatus 50) on the communication network 3. Note that the network interface 1060 may not be used.

The gate apparatus 10 is provided by installing a program for providing the gate apparatus 10 on the computer 1000 and starting the program. For example, the computer 1000 providing the gate apparatus 10 may be provided inside the camera unit 20 and/or the housing 14 or may be provided separately from the camera unit 20 and the housing 14. Furthermore, in a configuration according to another example embodiment to be described later in which a plurality of aisles 12 requiring personal identification are provided, at least one computer 1000 providing the gate apparatus 10 may be provided for a plurality of camera units 20 or a plurality of pairs of housings 14 (where left and right housings constitute one pair). Alternatively, the gate apparatus 10 may be provided by combining a plurality of computers 1000.

### <Operation Example>

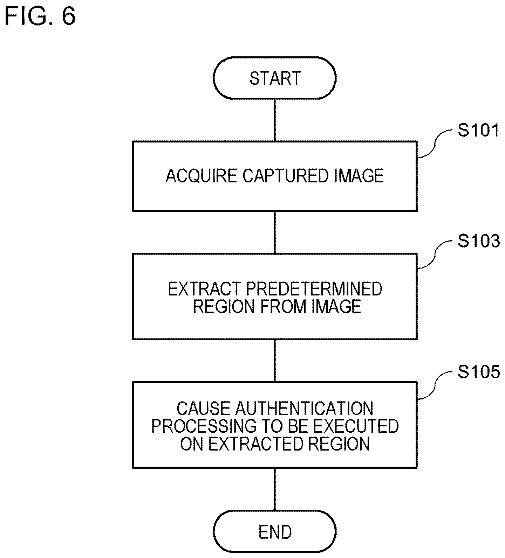

Fig. 6 is a flowchart illustrating an operation example of the gate apparatus 10 according to the present example embodiment.

The flow may be started by detection of approach or entry of a person to the gate apparatus 10 by a human sensor (unillustrated) provided in the gate apparatus 10 or may be periodically and repeatedly executed.

First, the acquisition unit 102 acquires an image 30 captured by the camera 5 (Step S101). The image 30 may be a static image or a dynamic image. The processing unit 104 extracts a region 34 by removing a predetermined region 32 from the image 30 (Step S103). Only the person P1 is included in the region 34 in Fig. 3B out of the three persons P1, P2, and P3 captured in the image 30 in Fig. 3A. Then, the processing unit 104 causes the authentication apparatus 50 to execute the authentication processing on the region 34 (Step S105).

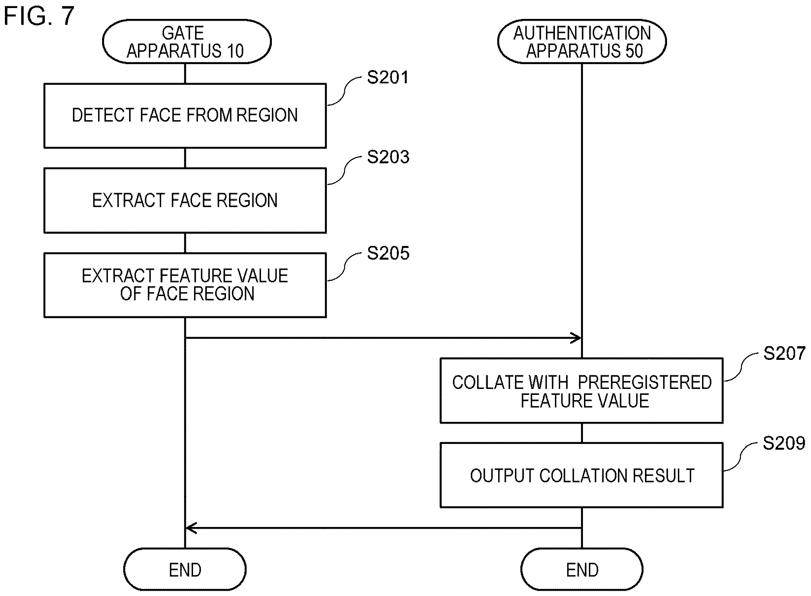

Next, the authentication processing in Step S105 will be described in detail by using Fig. 7.

First, the processing unit 104 detects a face in the region 34 extracted in Step S103 (Step S201). The face of the person P1 is detected here. Then, the processing unit 104 extracts a region of the detected face (Step S203) and extracts a feature value of the face region (Step S205).

The processing unit 104 transmits the feature value of the face extracted in Step S205 to the authentication apparatus 50 and causes the authentication apparatus 50 to execute the authentication processing.

The authentication apparatus 50 collates the feature value of the face transmitted from the gate apparatus 10 with a feature value of a face stored in a face feature value database (unillustrated) (Step S207) and transmits the collation result to the gate apparatus 10 (Step S209). When receiving the collation result, the gate apparatus 10 performs processing based on the result. The processing based on the collation result is not particularly specified in the present example embodiment.

As described above, one type of processing out of the processing in Step S205, the processing in Step S203 and Step S205, and the processing in Step S201 to Step S205 may be performed by the authentication apparatus 50. Specifically, the gate apparatus 10 may transmit at least one of the region 34 extracted from the image 30 in Step S103, the region of the face extracted in Step S201, and the feature value of the face region extracted in Step S203 to the authentication apparatus 50.

The authentication apparatus 50 may detect a face in the region 34 extracted from the image 30 received from the gate apparatus 10 (Step S201). The face of the person P1 is detected here. Then, the authentication apparatus 50 may extract a region of the detected face (Step S203) and extract a feature value of the face region (Step S205).

A feature value of the face of a person expected to pass through the gate may be previously stored in the face feature value database. A feature value of the face of a person included in a so-called blacklist (such as wanted suspects including criminals) or a white list (such as very important persons) may be further stored in the face feature value database.

Further, in order to narrow down a feature value of a face used for collation from feature values stored in the face feature value database, identification information of a user may be acquired immediately before the user passes through the gate (for example, at an entrance of a building or a floor, at a predetermined location such as a midway point on a route to the gate, or at the entrance side of the housing 14 of the gate), and a feature value of a face associated with the identification information may be acquired from the face feature value database.

Alternatively, an image of the face of a user may be captured before the user passes through the gate, for example, at an entrance of a building or a floor, or at a predetermined location such as a midway point on a route to the gate, and collation may be performed on a feature value of the face extracted from the captured image. In this configuration, whether the user enters the gate on a regular route can also be determined.

While identification information of a user is not particularly limited as long as the information allows the user to be uniquely determined, for example, the information may be identification information issued for each user at user registration for using a service, or identification information being previously acquired by the user and being registered.

While various methods for acquiring identification information of a user by the authentication apparatus 50 may be considered, for example, a two-dimensional code including identification information displayed on a mobile terminal of a user by using an application or the like, or a two-dimensional code printed on a sheet previously distributed to a user may be read by using a two-dimensional code reader, or identification information may be read from an IC tag, an IC card, or the like being held by or being previously distributed to a user, by using a predetermined reader.

As describe above, the acquisition unit 102 acquires an image 30 captured by the camera 5, and the processing unit 104 can cause the authentication apparatus 50 to execute the authentication processing on a predetermined region 34 in the image 30, according to the present example embodiment. With the configuration, even when a plurality of persons in a surrounding area other than an authentication target are captured in the image 30 captured by the camera 5, a region being a processing target can be narrowed by removing a predetermined region 32 from the image 30; and therefore a person being the authentication target can be narrowed down.

When the gate apparatus 10 is installed in an existing facility, a space for installation may be restricted. Further, a case of a person attempting to pass through without properly lining up or a case of people passing through one after another due to nonexistence of a stop line may be assumed at a location used by many people. In such a case, avoiding stagnation in a flow of people is also important, and processing speed is also required.

The present example embodiment enables an authentication target person to be narrowed down merely by performing processing of removing a predetermined region 32 from an image 30 and therefore enables reduction in a processing load, leading to increased processing speed and higher efficiency, compared with a case of detecting a plurality of persons in the image 30 and, for each person, performing determination processing of whether the person is an authentication target person by image recognition processing or the like. In other words, an authentication target person can be narrowed down by simple processing without performing complex processing, and therefore authentication efficiency can be improved with a reduced processing load.

### (Second Example Embodiment)

### <Functional Configuration Example>

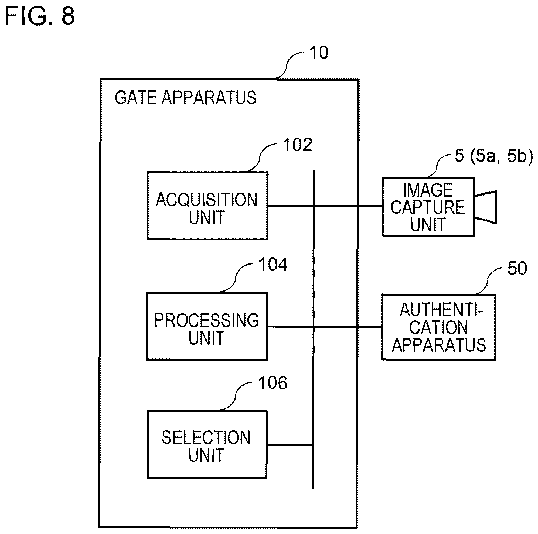

Fig. 8 is a functional block diagram illustrating a functional configuration example of a gate apparatus according to the present example embodiment.

The gate apparatus 10 according to the present example embodiment is similar to that according to the aforementioned example embodiment except for being configured to further select an authentication target person, based on an interpupillary distance.

The gate apparatus 10 further includes a selection unit 106 in addition to the configuration of the gate apparatus 10 in Fig. 4.

A processing unit 104 selects a person whose interpupillary distance satisfies a criterion as an authentication target out of persons in an image 30.

The processing unit 104 recognizes the eyes of a person in a region 34 in an image 30 by image processing and finds the distance between centers of the pupils of both eyes (hereinafter referred to as an "interpupillary distance") of each person. The selection unit 106 first selects a person whose interpupillary distance is equal to or greater than a reference value. Next, the selection unit 106 selects a person with the maximum interpupillary distance out of the selected persons. Thus selected person is selected as an authentication target person satisfying the criterion.

Specifically, when an image 30 has a resolution of 1080 by 1920 pixels, the reference value of an interpupillary distance is set to be equal to or greater than 60 pixels in a horizontal direction of the image 30. The reference value is preset based on the size and the resolution of the image 30, the focal distance between a camera 5 and an authentication target person passing along an aisle 12, an image capture condition of the camera 5, and the like.

### <Operation Example>

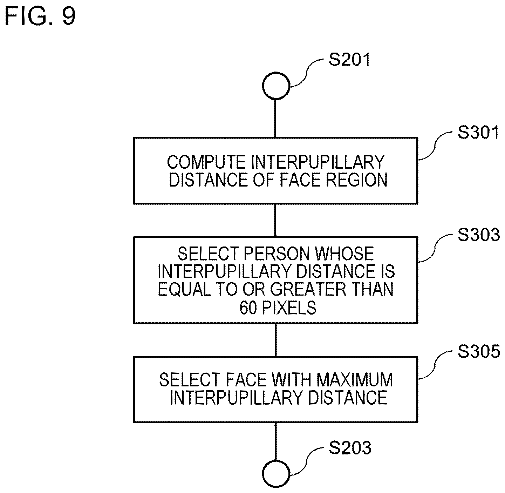

Fig. 9 is a flowchart illustrating part of an operation example of the gate apparatus 10 according to the present example embodiment. The flow in the present example embodiment is executed between Step S201 and Step S203 in the operation flow of the gate apparatus 10 according to the first example embodiment in Fig. 7.

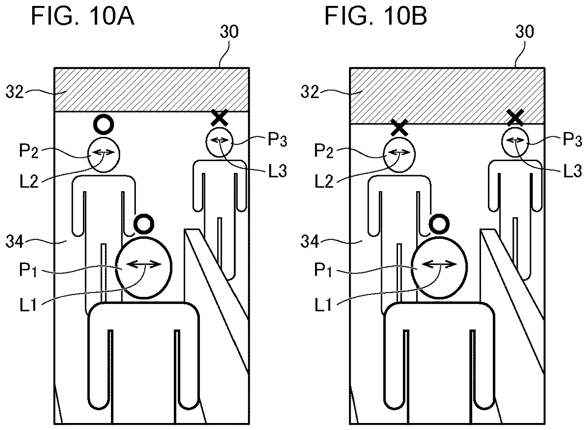

After a face region of a face detected from a region 34 is extracted from an image 30 acquired by the acquisition unit 102 (Step S201), similarly to the gate apparatus 10 according to the aforementioned example embodiment, the processing unit 104 recognizes the eyes in the face region of each person by image processing and computes the interpupillary distance of the person (Step S301). It is assumed in in Fig. 10A that the interpupillary distances of persons P1, P2, and P3 are computed to be L1, L2, and L3, respectively (where L1 > L2 > 60 pixels > L3).

Then, the selection unit 106 selects a person whose interpupillary distance computed in Step S301 is equal to or greater than a reference value (60 pixels in the image 30 in a horizontal direction in this example) (Step S303). In this example, the persons P1 and P2 marked with circles in Fig. 10A are selected.

Furthermore, in Step S303, when a plurality of persons are selected, the selection unit 106 selects a person with the maximum interpupillary distance (Step S305). Since two persons are selected in the example in Fig. 10A, the person P1 with the maximum interpupillary distance (L1) is selected out of the person P1 and the person P2. The person P1 marked with a circle is selected in an example in Fig. 10B. Then, the processing returns to Step S203 in Fig. 7.

In Fig. 7, the processing unit 104 extracts a face region of the person P1 selected in Step S305 (Step S203) and extracts a feature value of the face region (Step S205). The processing unit 104 transmits the extracted feature value to the authentication apparatus 50 and causes the authentication apparatus 50 to execute the authentication processing (Steps S207 and 209). Then, the processing unit 104 receives the collation result from the authentication apparatus 50.

According to the present example embodiment described above, a person whose interpupillary distance is equal to or greater than the criterion and is maximum is selected out of a plurality of persons in the region 34 by the selection unit 106, and the authentication apparatus 50 is caused to perform the authentication processing on the selected person; and therefore even when a plurality of persons exist in the region 34, an authentication target person can be narrowed down. Since processing is performed on the image 30 the range of which is already narrowed to the region 34, the number of persons whose interpupillary distances are to be found can be reduced, leading to a reduced processing load and excellent efficiency. Specifically, an authentication target person can be narrowed down by simple processing without performing complex processing, and therefore authentication efficiency can be improved with a reduced processing load.

### (Third Example Embodiment)

A gate apparatus 10 according to the present example embodiment is similar to that according to the first example embodiment or the second example embodiment described above except for using captured images from two cameras 5a and 5b.

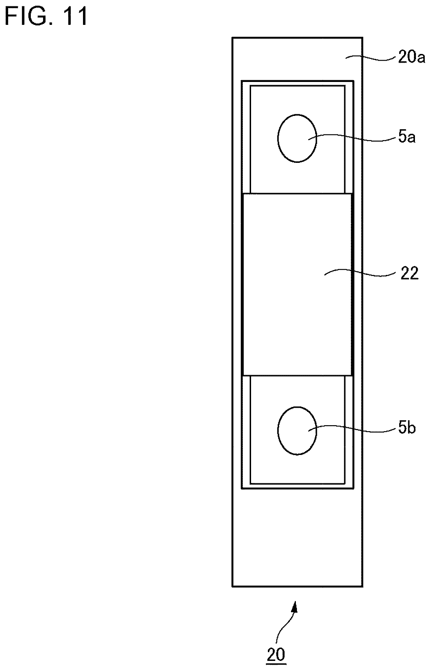

Fig. 11 is a front view of a camera unit 20. The camera unit 20 includes a display unit 2 and the two cameras 5a and 5b at the center of a front 20a of a housing of the camera unit 20. The two cameras 5a and 5b are installed at different heights. The display unit 22 is preferably placed at a height allowing a person passing along an aisle 12 to view the display unit 22 when the person just faces the front of the camera unit 20. For example, the height at which the display unit 22 is installed may be determined from an average height of adults. The two cameras 5a and 5b are provided above and below the display unit 22, respectively.

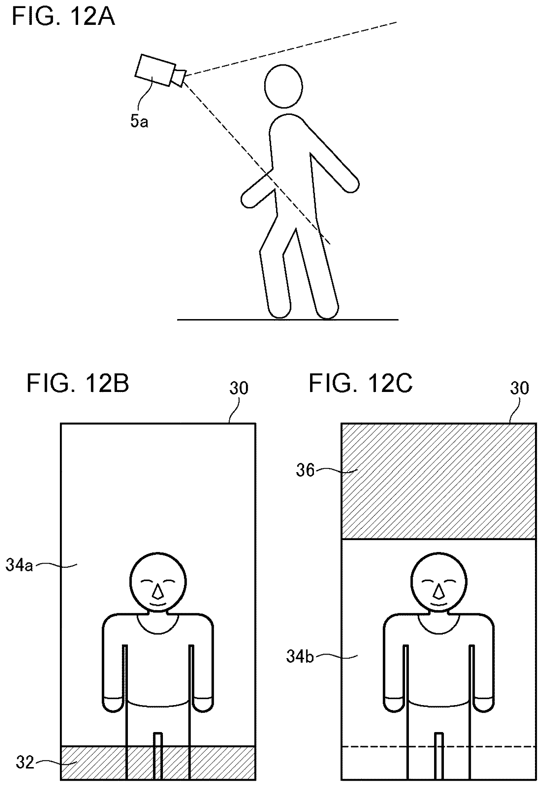

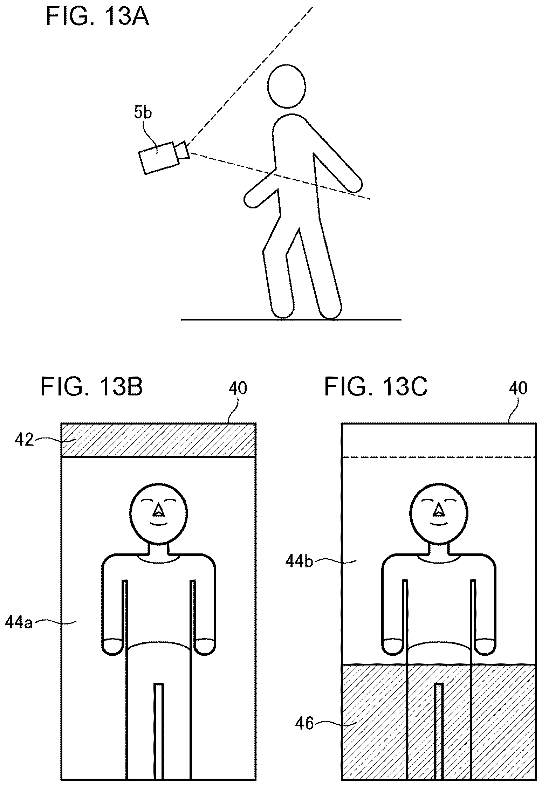

Fig. 12A illustrates a scene in which an image of a person is captured by using the camera 5a (first image capture means) installed at a position where an image of the face of the person is captured from above. Fig. 13A illustrates a scene in which an image of a person is captured by using the camera 5b (second image capture means) installed at a position where an image of the face of the person is captured from below.

An acquisition unit 102 acquires a first image 30 captured by the camera 5a capturing an image of a person from above. A processing unit 104 causes an authentication apparatus 50 to execute authentication processing on a region in the first image 30 at least including a range including the face of a person with a height being a target of personal identification.

For example, a height being a target of personal identification is 110 cm to 190 cm but is not limited thereto.

In an example in Fig. 12B, a range 34a in the first image 30 including the face of a person with a height of 110 cm is set to a target region of the authentication processing. In this example, a range (region 32) including the lower end of the first image 30 up to below the face (below the chin) of a person with a height of 110 cm is removed. For example, in a full high-definition image with a resolution of 1080 by 1920 pixels, a range (region 32) of 130 pixels from the lower end of the first image 30 is removed.

In another example, a region above the face of a person with a height of 190 cm may be set to a masked region.

Furthermore, the acquisition unit 102 acquires a second image 40 captured by the camera 5b capturing an image of a person from below. The processing unit 104 causes the authentication apparatus 50 to execute the authentication processing on a region in the second image 40 acquired by removing a range of at least 10% from the upper end in a downward direction.

In an example in Fig. 13B, a region 44a in a second image 40 acquired by removing a range (region 42) of at least 10% from the upper end of the second image 40 in the downward direction is set to a target region of the authentication processing. For example, in a full high-definition image with a resolution of 1080 by 1920 pixels, a range of 192 pixels from the upper end of the second image 40 is removed. The reason is that when an image of a face is captured from below, the face included in the upper side of the image 30 is distorted and therefore the authentication processing target region removes it.

Alternatively, the processing unit 104 may cause the authentication apparatus 50 to execute the authentication processing on a region in the first image 30 acquired by removing a part including at least the upper end. Furthermore, the processing unit 104 may cause the authentication apparatus 50 to execute the authentication processing on a region in the second image 40 acquired by removing a a part including at least the lower end.

Further, the processing unit 104 may cause the authentication apparatus 50 to execute the authentication processing on at least an overlapping region of the first image 30 and the second image 40.

For example, the overlapping region of the first image 30 and the second image 40 is a region 34b in the first image 30 in Fig. 12C and a region 44b in the second image 40 in Fig. 13C.

Specifically, the processing unit 104 may extract the region 34b in Fig. 12C and set the region to a target region of the authentication processing for the first image 30 and may extract the region 44b in Fig. 13C and set the region to a target region of the authentication processing for the second image 40.

The authentication apparatus 50 may perform the authentication processing on the regions extracted from the first image 30 and the second image 40, respectively, or may perform the authentication processing on at least one of the regions.

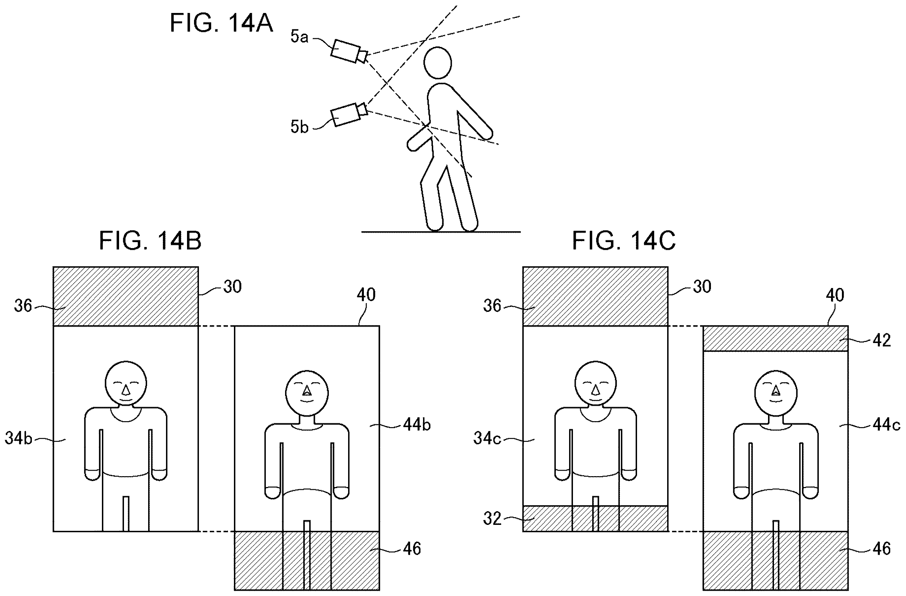

Furthermore, as illustrated in Fig. 14C, a region 34c acquired by further removing the region 32 related to the height restriction (110 cm) from the region 34b being an overlapping region of the first image 30 and the second image 40 extracted from the first image 30 as illustrated in Fig. 14B may be set to an authentication target region. Furthermore, as illustrated in Fig. 14C, a region 44c acquired by further removing the region 42 being 10% from the upper end in the downward direction from the region 44b being an overlapping region of the first image 30 and the second image 40 extracted from the second image 40 as illustrated in Fig. 14B may be set to an authentication target region.

Further, a configuration including the selection unit 106 according to the second example embodiment may be employed in the present example embodiment. Specifically, the interpupillary distance of a person included in each of the region 34c and the region 44c narrowed down by the processing unit 104 may be further computed, and a person being an authentication target may be selected based on the computed interpupillary distance.

According to the present example embodiment, a predetermined region can be set to a target region of the authentication processing by removing predetermined regions from images captured by using the two cameras 5, respectively, by the processing unit 104.

Thus, an authentication target person can be narrowed down by simple processing of narrowing an image 30 to a predetermined region without performing complex processing, and therefore authentication efficiency can be improved with a reduced processing load.

While the example embodiments of the present invention have been described above with reference to the drawings, the example embodiments are exemplifications of the present invention, and various configurations other than those described above may be employed. For example, the present invention is applicable to a gate apparatus at least including the camera 5 and the display unit 22 and not including the housing 14 and the opening-closing flap door. Specifically, in aisles 12 not being partitioned by the housing 14 or the like and being passed through by people, the camera unit 20 may be provided on a predetermined mounting stand placed at a side of each aisle 12. More people may be captured in an image 30 when at least one aisle 12 is not partitioned by the housing 14 and many people use the aisle. The gate apparatus 10 according to the present invention can narrow down an authentication target person and therefore is more effective in such a case.

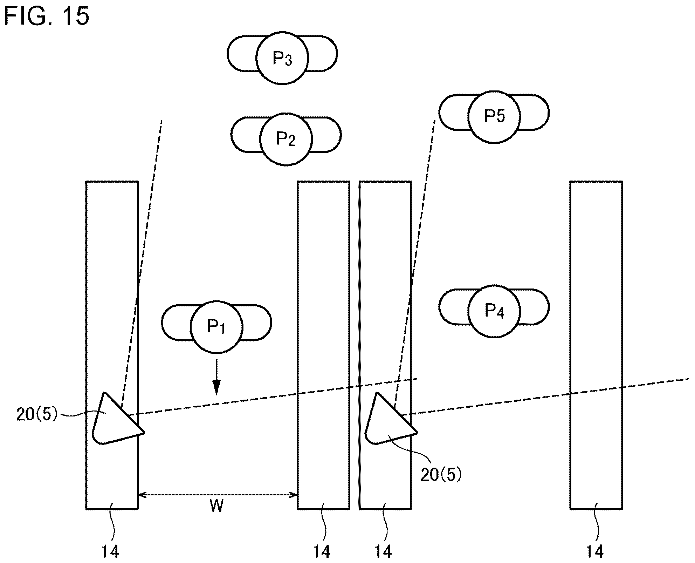

Further, a plurality of aisles 12 may be placed in parallel. Fig. 15 illustrates a scene in which a plurality of aisles 12 are placed in parallel. For example, a captured image 30 of a person P1 being an authentication target may include a plurality of persons not being authentication targets, such as a succeeding persons P2 and P3, and a person P5 in another aisle 12, in this example. However, according to the present example embodiment, even when a plurality of aisles 12 are installed in parallel, an authentication target region can be narrowed by previously setting a region being an authentication target to the camera 5. Thus, an authentication target person can be narrowed down by simple processing without performing complex processing.

Note that setting of the region 34 may be performed for each camera 5, the same setting may be applied to a plurality of cameras 5, or grouping may be performed before setting. A setting may be accepted from a setting screen by using a terminal (unillustrated) used by a manager managing each gate apparatus 10; or a computer 1000 providing the gate apparatus 10 may be connected to a display, and a setting operation may be accepted by causing the display to display a setting screen.

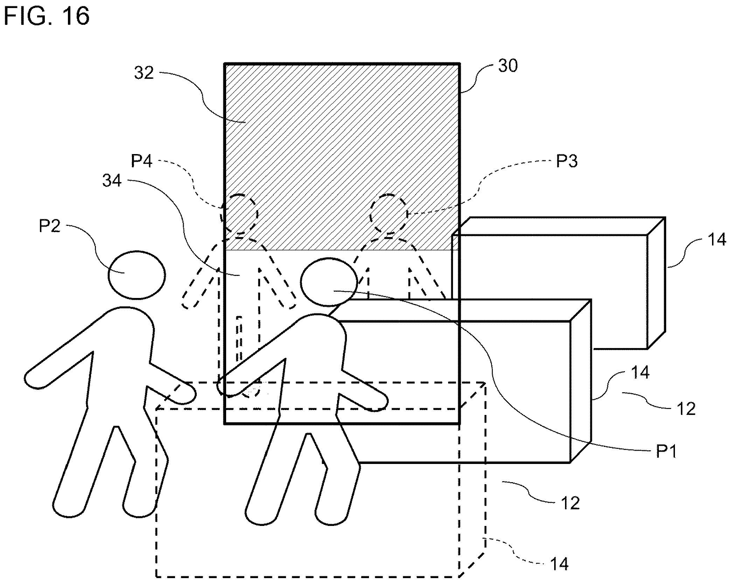

Fig. 16 illustrates a scene in which a plurality of gate apparatuses 10 are placed in parallel and a plurality of persons P1 to P4 pass through a plurality of aisles 12. The diagram tells that a region 34 acquired by removing an upper region 32 from an image 30 by the processing unit 104 in the gate apparatus 10 includes only the person P1 being an authentication target person in the image 30 out of the plurality of persons P1 to P4.

According to the example embodiment, an authentication target region is narrowed for each of images transmitted from a plurality of camera units 20 and an authentication target person is narrowed down; and therefore a processing load on the authentication apparatus 50 performing the authentication processing on a plurality of images is reduced.

Furthermore, a terminal used by a manager or the gate apparatus 10 may further include a region setting means (unillustrated) implemented by an application for region setting. The region setting means may include a display processing unit (unillustrated) acquiring an image from a camera 5 and causing a display on the terminal or the gate apparatus 10 to display the image on a screen, and an acceptance unit (unillustrated) accepting, by using a graphical user interface (GUI) on the screen, specification of a region 34 in which the face of a person in an image displayed on the screen and biometric information being an authentication target can be acquired in a state of causing the person to stand at a standing position for an authentication target person in front of the camera 5, or a region 32 that can be removed.

The configuration enables suitable and easy specification of a region varying with the installation position (the height and the orientation) of the camera 5, the width and the distance of the aisle 12, or the like, according to an actual use environment.

When a terminal is used, setting information of a region specified by the region setting means in the terminal may be input to a gate apparatus 10 and be stored in a memory 1030 or a storage device 1040 in a computer 1000 providing the gate apparatus 10 described later. Alternatively, when the gate apparatus 10 is used, a region accepted by the acceptance unit in the region setting means may be stored in the memory 1030 or the storage device 1040 in the computer 1000, to be described later, providing the gate apparatus 10.

Specification of a region may be indicated by a trimming position relative to an image 30. The trimming position may specify at least one of a downward distance (a pixel count or a percentage) from the upper end of the image 30, an upward distance (a pixel count or a percentage) from the lower end of the image 30, a rightward distance (a pixel count or a percentage) from the left end of the image 30, and a leftward distance (a pixel count or a percentage) from the right end of the image 30.

The processing unit 104 in the gate apparatus 10 can process the image 30 by using the stored setting of the region 34 or the region 32.

While the present invention has been described with reference to example embodiments and examples thereof, the present invention is not limited to the aforementioned example embodiments and examples. Various changes and modifications that may be understood by a person skilled in the art may be made to the configurations and details of the present invention without departing from the scope of the present invention.

Note that, when information about a user is acquired and used in the present invention, the acquisition and use are assumed to be performed legally.

The whole or part of the example embodiments described above may be described as, but not limited to, the following supplementary notes.
1. A gate apparatus including:
   an acquisition means for acquiring an image captured by an image capture means provided at a side of an aisle through which a person whose personal identification is required passes; and
   a processing means for causing an authentication means to execute authentication processing on a predetermined region in the acquired image.
2. The gate apparatus according to 1., further including
   a selection means for selecting, out of one or more persons in the image, a person whose interpupillary distance satisfies a criterion as an authentication target.
3. The gate apparatus according to 1. or 2., wherein
   the acquisition means acquires a first image captured by a first image capture means for capturing an image of a person from above, and
   the processing means causes the authentication means to execute the authentication processing on a region in the first image including at least a range including a face of a person with a height being a target of personal identification.
4. The gate apparatus according to any one of 1. to 3., wherein
   the acquisition means acquires a second image captured by a second image capture means for capturing an image of a person from below, and
   the processing means causes the authentication means to execute the authentication processing on a region in the second image acquired by removing a range of at least 10% from an upper end in a downward direction.
5. The gate apparatus according to any one of 1. to 4., wherein
   the acquisition means acquires a first image captured by a first image capture means for capturing an image of a person from above, and
   the processing means causes the authentication means to execute the authentication processing on a region in the first image acquired by removing a part including at least an upper end.
6. The gate apparatus according to any one of 1. to 5., wherein
   the acquisition means acquires a second image captured by a second image capture means for capturing an image of a person from below, and
   the processing means causes the authentication means to execute the authentication processing on a region in the second image acquired by removing a part including at least a lower end.
7. The gate apparatus according to 6., wherein
   the processing means causes the authentication means to execute the authentication processing on at least an overlapping region of the first image and the second image.
8. A gate apparatus arrangement method including
   placing a plurality of the gate apparatuses according to any one of 1. to 7. in parallel.
9. A gate system including:
   a camera being provided at a side of an aisle through which a person whose personal identification is required passes;
   an authentication apparatus; and
   a gate apparatus, wherein
   the gate apparatus includes:
      an acquisition means for acquiring an image captured by the camera; and
      a processing means for causing the authentication apparatus to execute authentication processing on a predetermined region in the acquired image.
10. The gate system according to 9., wherein
   the gate apparatus further includes a selection means for selecting, out of one or more persons in the image, a person whose interpupillary distance satisfies a criterion as an authentication target.
11. The gate system according to 9. or 10., wherein,
   in the gate apparatus,
   the acquisition means acquires a first image captured by a first image capture means for capturing an image of a person from above, and
   the processing means causes the authentication apparatus to execute the authentication processing on a region in the first image including at least a range including a face of a person with a height being a target of personal identification.
12. The gate system according to any one of 9. to 11., wherein,
   in the gate apparatus,
   the acquisition means acquires a second image captured by a second image capture means for capturing an image of a person from below, and
   the processing means causes the authentication apparatus to execute the authentication processing on a region in the second image acquired by removing a range of at least 10% from an upper end in a downward direction.
13. The gate system according to any one of 9. to 12., wherein,
   in the gate apparatus,
   the acquisition means acquires a first image captured by a first image capture means for capturing an image of a person from above, and
   the processing means causes the authentication apparatus to execute the authentication processing on a region in the first image acquired by removing a part including at least an upper end.
14. The gate system according to any one of 9. to 13., wherein,
   in the gate apparatus,
   the acquisition means acquires a second image captured by a second image capture means for capturing an image of a person from below, and
   the processing means causes the authentication apparatus to execute the authentication processing on a region in the second image acquired by removing a part including at least a lower end.
15. The gate system according to 14., wherein,
   in the gate apparatus,
   the processing means causes the authentication apparatus to execute the authentication processing on at least an overlapping region of the first image and the second image.
16. The gate system according to any one of 9. to 15., including
   a plurality of the gate apparatuses being placed in parallel.
17. A gate apparatus image processing method including, by a gate apparatus:
   acquiring an image captured by an image capture means provided at a side of an aisle through which a person whose personal identification is required passes; and
   causing an authentication means to execute authentication processing on a predetermined region in the acquired image.
18. The gate apparatus image processing method according to 17., further including, by the gate apparatus,
   selecting, out of one or more persons in the image, a person whose interpupillary distance satisfies a criterion as an authentication target.
19. The gate apparatus image processing method according to 17. or 18., further including, by the gate apparatus:
   acquiring a first image captured by a first image capture means for capturing an image of a person from above; and
   causing the authentication means to execute the authentication processing on a region in the first image including at least a range including a face of a person with a height being a target of personal identification.
20. The gate apparatus image processing method according to any one of 17. to 19., further including, by the gate apparatus:
   acquiring a second image captured by a second image capture means for capturing an image of a person from below; and
   causing the authentication means to execute the authentication processing on a region in the second image acquired by removing a range of at least 10% from an upper end in a downward direction.
21. The gate apparatus image processing method according to any one of 17. to 20., further including, by the gate apparatus:
   acquiring a first image captured by a first image capture means for capturing an image of a person from above; and
   causing the authentication means to execute the authentication processing on a region in the first image acquired by removing a part including at least an upper end.
22. The gate apparatus image processing method according to any one of 17. to 21., further including, by the gate apparatus:
   acquiring a second image captured by a second image capture means for capturing an image of a person from below; and
   causing the authentication means to execute the authentication processing on a region in the second image acquired by removing a part including at least a lower end.
23. The gate apparatus image processing method according to 22., further including, by the gate apparatus,
   causing the authentication means to execute the authentication processing on at least an overlapping region of the first image and the second image.
24. A program for causing a computer to execute:
   a procedure for acquiring an image captured by an image capture means provided at a side of an aisle through which a person whose personal identification is required passes; and
   a procedure for causing an authentication means to execute authentication processing on a predetermined region in the acquired image.
25. The program according to 24., further causing a computer to execute
   a procedure for selecting, out of one or more persons in the image, a person whose interpupillary distance satisfies a criterion as an authentication target.
26. The program according to 24. or 25., further causing a computer to execute:
   a procedure for acquiring a first image captured by a first image capture means for capturing an image of a person from above; and
   a procedure for causing the authentication means to execute the authentication processing on a region in the first image including at least a range including a face of a person with a height being a target of personal identification.
27. The program according to any one of 24. to 26., further causing a computer to execute:
   a procedure for acquiring a second image captured by a second image capture means for capturing an image of a person from below; and
   a procedure for causing the authentication means to execute the authentication processing on a region in the second image acquired by removing a range of at least 10% from an upper end in a downward direction.
28. The program according to any one of 24. to 27., further causing a computer to execute:
   a procedure for acquiring a first image captured by a first image capture means for capturing an image of a person from above; and
   a procedure for causing the authentication means to execute the authentication processing on a region in the first image acquired by removing a part including at least an upper end.
29. The program according to any one of 24. to 28., further causing a computer to execute:
   acquiring a second image captured by a second image capture means for capturing an image of a person from below; and
   a procedure for causing the authentication means to execute the authentication processing on a region in the second image acquired by removing a part including at least a lower end.
30. The program according to 29., further causing a computer to execute
   a procedure for causing the authentication means to execute the authentication processing on at least an overlapping region of the first image and the second image.

### [Reference signs List]

1 Gate system
3 Communication network
5, 5a, 5b Camera
10 Gate apparatus
12 Aisle
14 Housing
20 Camera unit
20a Front
22 Display unit
30 Image, First image
40 Second image
50 Authentication apparatus
102 Acquisition unit
104 Processing unit
106 Selection unit
1000 Computer
1010 Bus
1020 Processor
1030 Memory
1040 Storage device
1050 Input-output interface
1060 Network interface

## Claims

1. A gate apparatus comprising:
acquisition means for acquiring an image captured by image capture means provided at a side of an aisle through which a person whose personal identification is required passes; and
processing means for causing authentication means to execute authentication processing on a predetermined region in the acquired image.

2. The gate apparatus according to claim 1, further comprising
selection means for selecting, out of one or more persons in the image, a person whose interpupillary distance satisfies a criterion as an authentication target.

3. The gate apparatus according to claim 1 or 2, wherein
the acquisition means acquires a first image captured by first image capture means for capturing an image of a person from above, and
the processing means causes the authentication means to execute the authentication processing on a region in the first image including at least a range including a face of a person with a height being a target of personal identification.

4. The gate apparatus according to any one of claims 1 to 3, wherein
the acquisition means acquires a second image captured by second image capture means for capturing an image of a person from below, and
the processing means causes the authentication means to execute the authentication processing on a region in the second image acquired by removing a range of at least 10% from an upper end in a downward direction.

5. The gate apparatus according to any one of claims 1 to 4, wherein
the acquisition means acquires a first image captured by first image capture means for capturing an image of a person from above, and
the processing means causes the authentication means to execute the authentication processing on a region in the first image acquired by removing a part including at least an upper end.

6. The gate apparatus according to any one of claims 1 to 5, wherein
the acquisition means acquires a second image captured by second image capture means for capturing an image of a person from below, and
the processing means causes the authentication means to execute the authentication processing on a region in the second image acquired by removing a part including at least a lower end.

7. The gate apparatus according to claim 6, wherein
the processing means causes the authentication means to execute the authentication processing on at least an overlapping region of the first image and the second image.

8. A gate apparatus arrangement method comprising
placing a plurality of the gate apparatuses according to any one of claims 1 to 7 in parallel.

9. A gate system comprising:
a camera being provided at a side of an aisle through which a person whose personal identification is required passes;
an authentication apparatus; and
a gate apparatus, wherein
the gate apparatus includes:
acquisition means for acquiring an image captured by the camera; and
processing means for causing the authentication apparatus to execute authentication processing on a predetermined region in the acquired image.

10. The gate system according to claim 9, wherein
the gate apparatus further includes selection means for selecting, out of one or more persons in the image, a person whose interpupillary distance satisfies a criterion as an authentication target.

11. The gate system according to claim 9 or 10, wherein,
in the gate apparatus,
the acquisition means acquires a first image captured by first image capture means for capturing an image of a person from above, and
the processing means causes the authentication apparatus to execute the authentication processing on a region in the first image including at least a range including a face of a person with a height being a target of personal identification.

12. The gate system according to any one of claims 9 to 11, wherein,
in the gate apparatus,
the acquisition means acquires a second image captured by second image capture means for capturing an image of a person from below, and
the processing means causes the authentication apparatus to execute the authentication processing on a region in the second image acquired by removing a range of at least 10% from an upper end in a downward direction.

13. The gate system according to any one of claims 9 to 12, wherein,
in the gate apparatus,
the acquisition means acquires a first image captured by first image capture means for capturing an image of a person from above, and
the processing means causes the authentication apparatus to execute the authentication processing on a region in the first image acquired by removing a part including at least an upper end.

14. The gate system according to any one of claims 9 to 13, wherein,
in the gate apparatus,
the acquisition means acquires a second image captured by second image capture means for capturing an image of a person from below, and
the processing means causes the authentication apparatus to execute the authentication processing on a region in the second image acquired by removing a part including at least a lower end.

15. The gate system according to claim 14, wherein,
in the gate apparatus,
the processing means causes the authentication apparatus to execute the authentication processing on at least an overlapping region of the first image and the second image.

16. The gate system according to any one of claims 9 to 15, comprising a plurality of the gate apparatuses being placed in parallel.

17. A gate apparatus image processing method comprising, by a gate apparatus:
acquiring an image captured by image capture means provided at a side of an aisle through which a person whose personal identification is required passes; and
causing authentication means to execute authentication processing on a predetermined region in the acquired image.

18. The gate apparatus image processing method according to claim 17, further comprising, by the gate apparatus,
selecting, out of one or more persons in the image, a person whose interpupillary distance satisfies a criterion as an authentication target.

19. The gate apparatus image processing method according to claim 17 or 18, further comprising, by the gate apparatus:
acquiring a first image captured by first image capture means for capturing an image of a person from above; and
causing the authentication means to execute the authentication processing on a region in the first image including at least a range including a face of a person with a height being a target of personal identification.

20. The gate apparatus image processing method according to any one of claims 17 to 19, further comprising, by the gate apparatus:
acquiring a second image captured by second image capture means for capturing an image of a person from below; and
causing the authentication means to execute the authentication processing on a region in the second image acquired by removing a range of at least 10% from an upper end in a downward direction.

21. The gate apparatus image processing method according to any one of claims 17 to 20, further comprising, by the gate apparatus:
acquiring a first image captured by first image capture means for capturing an image of a person from above; and
causing the authentication means to execute the authentication processing on a region in the first image acquired by removing a part including at least an upper end.

22. The gate apparatus image processing method according to any one of claims 17 to 21, further comprising, by the gate apparatus:
acquiring a second image captured by second image capture means for capturing an image of a person from below; and
causing the authentication means to execute the authentication processing on a region in the second image acquired by removing a part including at least a lower end.

23. The gate apparatus image processing method according to claim 22, further comprising, by the gate apparatus,
causing the authentication means to execute the authentication processing on at least an overlapping region of the first image and the second image.

24. A program for causing a computer to execute:
a procedure for acquiring an image captured by image capture means provided at a side of an aisle through which a person whose personal identification is required passes; and
a procedure for causing authentication means to execute authentication processing on a predetermined region in the acquired image.

25. The program according to claim 24, further causing a computer to execute
a procedure for selecting, out of one or more persons in the image, a person whose interpupillary distance satisfies a criterion as an authentication target.

26. The program according to claim 24 or 25, further causing a computer to execute:
a procedure for acquiring a first image captured by first image capture means for capturing an image of a person from above; and
a procedure for causing the authentication means to execute the authentication processing on a region in the first image including at least a range including a face of a person with a height being a target of personal identification.

27. The program according to any one of claims 24 to 26, further causing a computer to execute:
a procedure for acquiring a second image captured by second image capture means for capturing an image of a person from below; and
a procedure for causing the authentication means to execute the authentication processing on a region in the second image acquired by removing a range of at least 10% from an upper end in a downward direction.

28. The program according to any one of claims 24 to 27, further causing a computer to execute:
a procedure for acquiring a first image captured by first image capture means for capturing an image of a person from above; and
a procedure for causing the authentication means to execute the authentication processing on a region in the first image acquired by removing a part including at least an upper end.

29. The program according to any one of claims 24 to 28, further causing a computer to execute:
acquiring a second image captured by second image capture means for capturing an image of a person from below; and
a procedure for causing the authentication means to execute the authentication processing on a region in the second image acquired by removing a part including at least a lower end.

30. The program according to claim 29, further causing a computer to execute
a procedure for causing the authentication means to execute the authentication processing on at least an overlapping region of the first image and the second image.
